# EUROPÄISCHE PATENTSCHRIFT

(11) **EP 3 296 699 B1**
(45) Veröffentlichungstag und Bekanntmachung des Hinweises auf die Patenterteilung: **14.08.2019**
(21) Anmeldenummer: 17187417.5
(22) Anmeldetag: 23.08.2017
(51) Int. Cl.: G01D 5/14, G01D 5/244

(54) **WINKELSENSOR**
ANGLE SENSOR
CAPTEUR D'ANGLE

(30) Priorität: 16.09.2016 DE 102016217814
(43) Veröffentlichungstag der Anmeldung: 21.03.2018
(73) Patentinhaber: Continental Teves AG & Co. OHG, 60488 Frankfurt am Main (DE)
(72) Erfinder: Brüggemann, Stephan, 60431 Frankfurt/Main (DE); Kotlaja, Aleksandar, 63179 Obertshausen (DE); Krohn, Thomas, 65824 Schwalbach (DE); Eckrich, Jörg, 65201 Wiesbaden (DE)

(56) Entgegenhaltungen:
- EP-A2- 1 729 093
- DE-A1-102013 219 018
- DE-A1-102015 218 425
- JP-A- 2006 214 873
- US-A1- 2014 047 913

## Beschreibung

Die Erfindung betrifft einen Winkelsensor zum Erfassen eines Drehwinkels basierend auf einer relativen Winkellage eines physikalischen Feldes nach dem Oberbegriff des Anspruchs 1 sowie ein Verfahren zur Herstellung eines solchen Winkelsensors.

Eine bekannte Anwendung für Winkelsensoren sind Höhenstandssensoren in Fahrzeugen, die dazu dienen, die Höhe eines Karosserieteils gegenüber einer Fahrzeugachse oder in anderer Betrachtungsweise den Einfederweg eines Fahrzeugrades relativ zur Karosserie zu erfassen.

Dabei ist ein Gehäuse mit einem Sensorelement fest mit der Karosserie verbunden. Das Sensorelement befindet sich beispielsweise auf einem am Gehäuse befestigten Schaltungsträgersubstrat. An oder in dem Gehäuse ist ein Hebel drehbar gelagert, der, meist mittels eines Gestänges, mit der Aufhängung des Rades verbunden ist. Erfolgt beim Fahren eine Relativbewegung zwischen Rad und Karosserie, so führt dies zu einer Drehbewegung des Hebels. Der Hebel ist fest mit einer drehbaren Welle verbunden, an der sich ein Sensorelement befindet. Das zu diesem Sensorelement korrespondierende Sensorelement des Gehäuses ermöglicht die Erfassung des Drehwinkels der Welle. Oftmals wird als Sensorelement ein zylindrisch geformter Magnet eingesetzt, der stirnseitig in das Wellenende eingeklebt ist. Das andere Sensorelement, beispielsweise in Form eines Hall-Sensors, erfasst über die Änderung des Magnetfelds die Drehung der Welle. Da die mechanische Übersetzung von der linearen Bewegung zur Drehbewegung bekannt ist, kann der Messwert dieses Sensorelements in die momentane Höhe bzw. den Einfederweg umgerechnet werden.

Um hierbei Messfehler, wie z. B. Nichtlinearität, einzudämmen, müssen die Sensorelemente möglichst konzentrisch und in einem genau definierten, gleichbleibenden Abstand angeordnet sein. Hieraus resultiert die Notwendigkeit, über die gesamte Lebensdauer ein sehr geringes Spiel der Welle sicherzustellen.

Zur Lagerung der Welle im Gehäuse wird üblicherweise die Welle direkt in einer Bohrung des Gehäuses gelagert, was jedoch ein großes Spiel der Welle mit sich bringt und die Optimierung der Lagerfläche durch geeignetes Material und geeignete Bearbeitung erschwert. Alternativ wäre es möglich eine metallische Lagerbuchse in eine Gehäusebohrung einzupressen. Die Gehäusebohrung und die Lagerbuchse müssen bei dieser Bauweise entsprechend sehr eng toleriert sein, was zu hohen Kosten führt und nur begrenzt gewährleistet werden kann. Die Summe der vorzuhaltenden Toleranzen führt dabei nachteiligerweise zu einem großen magnetischen Nenn-Luftspalt in axialer Richtung zwischen den Sensorelementen. Kritisch sind unter anderem die Positionstoleranzen des Schaltungsträgers, der Sensorelemente, der Welle sowie der Lagerbuchse und der Gehäusebohrung, als auch Rundlauffehler der Welle sowie die Magnetisierung des Magneten.

Die 10 2013 219 018 A1 beschreibt einen Winkelsensor, bei dem die Welle in einer Bohrung des Gehäuses gelagert ist. Die Bohrung ist dabei als Sackloch ausgeführt, so dass der Winkelsensor vor eindringender Feuchtigkeit geschützt wird und damit robust ist. Jedoch erfordert die Herstellung dieses Winkelsensors einigen Aufwand, um das Spiel der Welle gering zu halten.

Das Dokument DE102015218425 A1 offenbart einen Winkelsensor gemäß dem Stand der Technik.

Der Erfindung liegt die Aufgabe zugrunde, einen Winkelsensor bereitzustellen, der kostengünstig ist und eine spielarme Drehwinkelerfassung erlaubt.

Diese Aufgabe wird erfindungsgemäß dadurch gelöst, dass das Gehäuse zumindest teilweise um eine Positioniervorrichtung umspritzt ausgebildet ist, wobei die Positioniervorrichtung in ein erstes und ein zweites Vorrichtungselement geteilt ist und wobei die Positioniervorrichtung die radiale und axiale Position der Welle und des ersten Sensorelements gegenüber dem zweiten Sensorelement bestimmt.

Vorteilhafte Ausgestaltungen der Erfindung sind Gegenstand der Unteransprüche.

Die Erfindung geht von der Überlegung aus, dass die Welle eines Winkelsensors möglichst exakt positioniert sein sollte, damit die Erfassung des Drehwinkels nicht verfälscht wird. Der Winkelsensor sollte jedoch auch kostengünstig hergestellt werden können.

Hier setzt die Erfindung mit dem Vorschlag an, eine Positioniervorrichtung zu verwenden, die die Welle mit dem ersten Sensorelement gegenüber dem zweiten Sensorelement exakt positioniert und mit der Welle und dem ersten Sensorelement eine kompakte Einheit bildet. Die Positioniervorrichtung ist in ein erstes und ein zweites Vorrichtungselement geteilt, so dass die Einheit einfach zu montieren ist. Dadurch, dass das Gehäuse zumindest teilweise um die Positioniervorrichtung umspritzt ausgebildet ist, liegen die beiden Vorrichtungselemente eng und spielfrei aneinander an, ohne dass bspw. eine Schraubvorrichtung oder andere Befestigungselemente nötig sind. Infolge des Drucks, der durch das Umspritzen auf die beiden Vorrichtungselemente der Positioniervorrichtung aufgebracht wird, verschwinden Luftspalte in der Anordnung nahezu vollständig, so dass das Spiel der Welle äußerst gering gehalten werden kann. Der Herstellungsaufwand hält sich in Grenzen und macht die Herstellung somit kostengünstig.

Im Sinne der Erfindung wird unter einem physikalischen Feld vorzugsweise die räumliche Verteilung einer physikalischen Größe verstanden, beispielsweise ein Magnetfeld, ein Elektrisches Feld, ein Temperaturfeld, ein Dichtefeld oder ein Gravitationsfeld. Die relative Winkellage eines physikalischen Feldes ergibt sich vorzugsweise aus der Ausrichtung der räumlichen Verteilung.

In einer bevorzugten Ausführungsform weist die Welle eine erste Stufe auf, an der das erste oder das zweite Vorrichtungselement oder beide mit einer ersten Auflagefläche anliegen. Auf diese Weise überträgt sich die durch das Umspritzen auf die Positioniervorrichtung ausgeübte Kraft sehr effizient in axialer Richtung auf die Welle und reduziert deren axiales Spiel.

Vorzugsweise weist die Welle eine zweite Stufe auf, an der das erste oder das zweite Vorrichtungselement oder beid mit einer zweiten Auflagefläche in der entgegengesetzten Richtung der ersten Auflagefläche anliegen. Somit lässt sich in einfacher Weise die axiale Positionierung der Welle genau festlegen.

Vorzugsweise liegt das zweite Vorrichtungselement in einer Richtung der Wellenachse sowohl an der Welle als auch an dem ersten Vorrichtungselement an. Dies ermöglicht eine kompakte Ausführung dieser Komponenten.

Bevorzugt wird eine Ausführungsform, bei der die Positioniervorrichtung, insbesondere das erste Vorrichtungselement, eine zylinderförmige oder konische Hülse um die Welle bildet. Somit verteilt sich der durch das Umspritzen aufgebrachte Druck gleichmäßig.

Vorzugsweise wird die Welle drehbar gelagert von der Positioniervorrichtung umschlossen. Somit ist die Welle auf einfache Weise in jeder radialen Richtung gelagert.

Gemäß einer bevorzugten Ausführungsform der Erfindung sind das erste und zweite Vorrichtungselement in einer Richtung der Wellenachse hintereinander angeordnet, wobei die Position der Welle von dem ersten Vorrichtungselement in radialer Richtung und von dem zweiten Vorrichtungselement in axialer Richtung bestimmt wird.

Gemäß einer weiteren bevorzugten Ausführungsform der Erfindung sind das erste und zweite Vorrichtungselement in einer Richtung senkrecht zur Wellenachse nebeneinander angeordnet, wobei die Position der Welle von dem ersten Vorrichtungselement in radialer Richtung und in axialer Richtung bestimmt wird.

Vorzugsweise wird der erfindungsgemäße Winkelsensor derart weitergebildet, dass die Vorrichtungselemente formschlüssig ineinander greifen oder durch Verrastelemente, Haken, Klammern, Verstemmdome, Schrauben, Nieten oder eine Klebeverbindung aneinander befestigt sind. Dies erleichtert bei der Herstellung das Umspritzen.

Vorzugsweise sind die Vorrichtungselemente formschlüssig gegen eine gegenseitige Verdrehung gesichert. Dies verhindert eine ungewollte Verdrehung im Betrieb des Winkelsensors.

Die erfindungsgemäße Sensoranordnung wird dadurch in vorteilhafter Weise weitergebildet, dass das zweite Sensorelement mit Leiterbahnen verbunden ist, wobei das zweite Sensorelement und wenigstens ein Teil der Leiterbahnen in die Positioniervorrichtung integriert sind. Somit wird eine bauraumsparende Ausführung des Winkelsensors, eine genaue Positionierung des zweiten Sensorelements und eine Auswertung von Sensorsignalen ermöglicht.

Vorzugsweise wird die erfindungsgemäße Sensoranordnung derart weitergebildet, dass die Positioniervorrichtung um das zweite Sensorelement und die Leiterbahnen umspritzt ausgebildet ist oder an diesen durch Verrastelemente, Haken, Klammern, Verstemmdome, Schrauben, Nieten oder eine Klebeverbindung befestigt ist. Die Integration des Sensorelements und wenigstens eines Teils der Leiterbahnen kann so auf einfache Weise erreicht werden.

Bevorzugt ist der Winkelsensor Teil eines Höhenstandssensors in einem Kraftfahrzeug.

Nach einem Aspekt der Erfindung weist ein Verfahren zum Herstellen des Winkelsensors die folgenden Schritte auf:
- Einlegen der Welle mit dem ersten Sensorelement in das erste Vorrichtungselement,
- Vervollständigen der Positioniervorrichtung durch Anbringen des zweiten Vorrichtungselements an dem ersten Vorrichtungselement,
- Einschieben der Einheit von Positioniervorrichtung, Welle und Sensorelement in eine Gehäuseform,
- Umspritzen des Gehäuses um die Einheit von Positioniervorrichtung, Welle und Sensorelement.

Vorzugsweise umfasst das Verfahren die Schritte
- Aufsetzen eines Hebels auf die Welle,
- Befestigen des Hebels auf der Welle durch Verformen der Welle.

Ausführungsbeispiele der Erfindung werden nachfolgend anhand von Zeichnungen näher erläutert. Darin zeigen in schematisierter Darstellung:
- Fig. 1: eine Darstellung eines Winkelsensors nach einem ersten Ausführungsbeispiel in einer Außenansicht;
- Fig. 2: eine Darstellung eines Winkelsensors nach einem zweiten Ausführungsbeispiel in einer Schnittansicht;
- Fig. 3: eine beispielhafte Darstellung einer Welle eines Winkelsensors mit einem ersten Sensorelement;
- Fig. 4: eine beispielhafte Darstellung eines ersten Vorrichtungselements eines Winkelsensors;
- Fig. 5: eine beispielhafte Darstellung des Zusammenspiels der Welle und des ersten Vorrichtungselements aus den Figuren 3 und 4;
- Fig. 6: eine beispielhafte Darstellung eines zweiten Vorrichtungselements eines Winkelsensors;
- Fig. 7: eine beispielhafte Darstellung eines zweiten Sensorelements mit Sensorgehäuse und Leiterbahnen;
- Fig. 8: eine beispielhafte Darstellung des Zusammenspiels des zweiten Vorrichtungselements aus Figur 6 und des zweiten Sensorelements aus Figur 7;
- Fig. 9: eine beispielhafte Darstellung der Anordnung aus Figur 8 in einer weiteren Ansicht;
- Fig. 10: eine beispielhafte Darstellung des Zusammenspiels der in den Figuren 8 und 9 gezeigten Anordnung mit der Anordnung aus Figur 5;
- Fig. 11: eine beispielhafte Darstellung der Anordnung aus Figur 10 in einer weiteren Ansicht;
- Fig. 12: eine beispielhafte Darstellung eines Winkelsensors in einem Verfahrensschritt der Herstellung;
- Fig. 13: eine beispielhafte Darstellung eines Winkelsensors in einem weiteren Verfahrensschritt der Herstellung;
- Fig. 14: eine beispielhafte Darstellung eines Winkelsensors nach Abschluss der Herstellung;
- Fig. 15: eine Detailansicht des in der Figur 14 dargestellten Winkelsensors;
- Fig. 16: eine beispielhafte Darstellung eines Winkelsensors in einer Vollschnitt-Ansicht;
- Fig. 17: eine Darstellung eines Winkelsensors nach einem dritten Ausführungsbeispiel in einem Verfahrensschritt der Herstellung in einer Vollschnitt-Ansicht;
- Fig. 18: eine Detailansicht des in der Figur 17 dargestellten Winkelsensors;
- Fig. 19: eine beispielhafte Darstellung einer Positioniervorrichtung in einer Schnittdarstellung;

Gleiche Teile sind in allen Figuren mit denselben Bezugszeichen versehen.

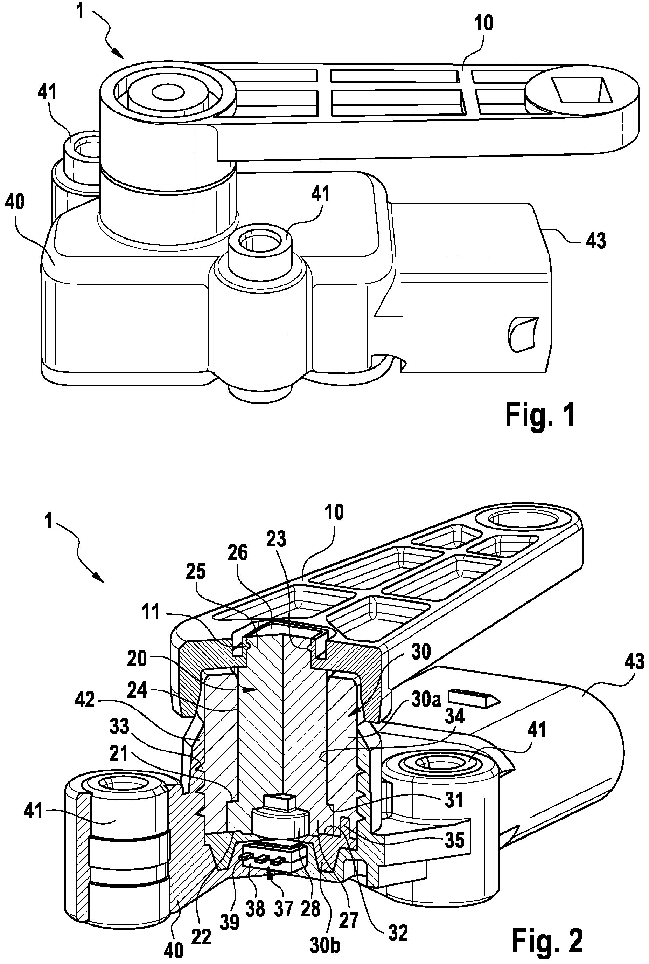

Ein Winkelsensor 1 nach einem ersten Ausführungsbeispiel der Erfindung, ist schematisch in Fig. 1 dargestellt. Der Winkelsensor 1 weist einen Hebel 10 auf, der an einem Ende mit dem Teil (nicht dargestellt) verbunden werden kann, dessen relative Bewegung im Fall einer Verwendung als Höhenstandssensor erfasst werden soll. Dazu kann zur Bildung eines Gestänges auch ein zweiter Hebel zwischen dem Hebel 10 und dem Teil vorgesehen sein. Die Befestigung des Hebels 10 an der Welle 20 gewährleistet eine Schraubverbindung. Das andere Ende des Hebels 10 ist fest mit einer Welle 20 verbunden, die in der Figur verdeckt ist. Die Welle 20 ragt in einen Zylinderbereich 42 eines Gehäuses 40, das Befestigungsvorrichtungen 41 sowie einen Anschlussbereich 43 für elektrische Leitungen aufweist. Sowohl die Welle 20, als auch das Gehäuse 40 bestehen in diesem Ausführungsbeispiel aus Kunststoff. Mit den Befestigungsvorrichtungen 41 kann das Gehäuse 40 an einem Teil der Fahrzeugkarosserie befestigt werden, so dass es möglich ist, über den Hebel 10 bzw. das Gestänge eine lineare Relativbewegung, beispielsweise einer Fahrzeugachse, zu erfassen.

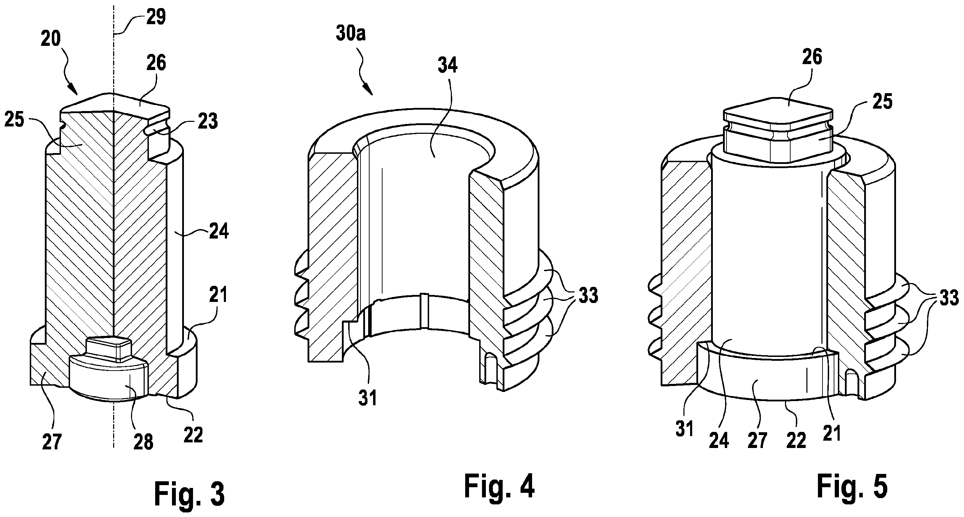

In Fig. 2 ist ein zweites Ausführungsbeispiel eines erfindungsgemäßen Winkelsensors 1 schematisch dargestellt. Bei diesem Ausführungsbeispiel ist der Hebel 10 an einem kantig ausgeführten Wellenkopf 25 durch eine Verstemmrippe 11 befestigt, die mit einer Nut 23 der Welle 20 einen Hinterschnitt bildet. In dem freigeschnittenen Bereich der Darstellung ist erkennbar, wie die Welle 20 in einer Positioniervorrichtung 30 gelagert ist. Im Wellenfuß 27 befindet sich eine Ausnehmung, in der ein erstes Sensorelement 28 eingeklebt oder anderweitig befestigt ist, das mit dem Wellenfuß 27 zumindest näherungsweise plan abschließt und das mit einem koaxial positionierten zweiten Sensorelement 37 korrespondiert. Zudem ist der Wellenfuß 27 als erhabener Bereich ausgebildet. Der erhabene Bereich wird durch eine erste Stufe 21 und eine zweite Stufe 22 begrenzt, wie auch in Fig. 3 deutlich wird. Die Wellenachse 29 ist aus Gründen der Übersichtlichkeit nur in Fig. 3 dargestellt.

Die Positioniervorrichtung 30 ist in ein erstes Vorrichtungselement 30a und ein zweites Vorrichtungselement 30b geteilt. Wie auch aus Fig. 5 ersichtlich übernimmt das erste Vorrichtungselement 30a im Wesentlichen die radiale Lagerung der Welle 20 und ist hülsenförmig ausgebildet. Das zweite Vorrichtungselement 30b übernimmt im Wesentlichen die axiale Lagerung der Welle 20 und ist flach ausgebildet. Die Positioniervorrichtung 30 weist eine Vorrichtungs-Lagerfläche 34 auf, die mit einer wellenseitigen Lagerfläche 24 gleitend in Kontakt ist. Beide Lagerflächen 24, 34 weisen eine glatte Oberfläche auf, um Drehbewegungen der Welle 20 zu erleichtern. Die Innenkontur des ersten Vorrichtungselements 30a folgt mit einer ersten Auflagefläche 31 der ersten Stufe 21 der Welle 20, so dass axiale Kräfte übertragen werden können. An der zweiten Stufe 22 auf der Gegenseite liegt das zweite Vorrichtungselement 30b mit einer zweiten Auflagefläche 32 an, so dass die Welle 20 axial beidseitig gesichert ist. Das zweite Vorrichtungselement 30b weist einen oder mehrere Stifte 35 auf, die in entsprechenden Ausnehmungen des ersten Vorrichtungselements 30a Platz finden und so als Steckverbinder dienen. Sockel an der Unterseite des zweiten Vorrichtungselements 30b dienen während eines Umspritzvorgangs in der Herstellung als Halterung. In Folge des Umspritzvorgangs übertragen außen an dem ersten Vorrichtungselement 30a umlaufende Rippen 33 Axialkräfte. Die umlaufenden Rippen 33 sind in Fig. 4 noch deutlicher erkennbar. Durch leichtes Aufschmelzen der umlaufenden Rippen 33 wird außerdem Dichtheit gegenüber äußeren Einflüssen, beispielsweise Flüssigkeiten, erzielt.

Das Gehäuse 40 ist um die Positioniervorrichtung 30 umspritzt ausgebildet, so dass das erste und zweite Vorrichtungselement 30a, 30b, fest zusammengepresst, die radiale und axiale Position der Welle 20 und damit auch des ersten Sensorelements 28 festlegen. Es reicht dabei aus, dass ein Teil der Positioniervorrichtung 30 von dem Gehäuse 40 umspritzt ist. Das zweite Sensorelement 37 ist in einem Sensorgehäuse 38 eingekapselt und mitsamt Leiterbahnen 39 ebenfalls von dem Gehäuse 40umspritzt. Die Befestigungsvorrichtungen 41, die Positioniervorrichtung 30 mit Welle 20 und erstem Sensorelement 28 sowie das zweite Sensorelement 37 mit Sensorgehäuse 38 und Leiterbahnen 39 bilden Einlegeteile, die vor dem Spritzvorgang für das Gehäuse 40 in eine Gehäuseform eingelegt werden.

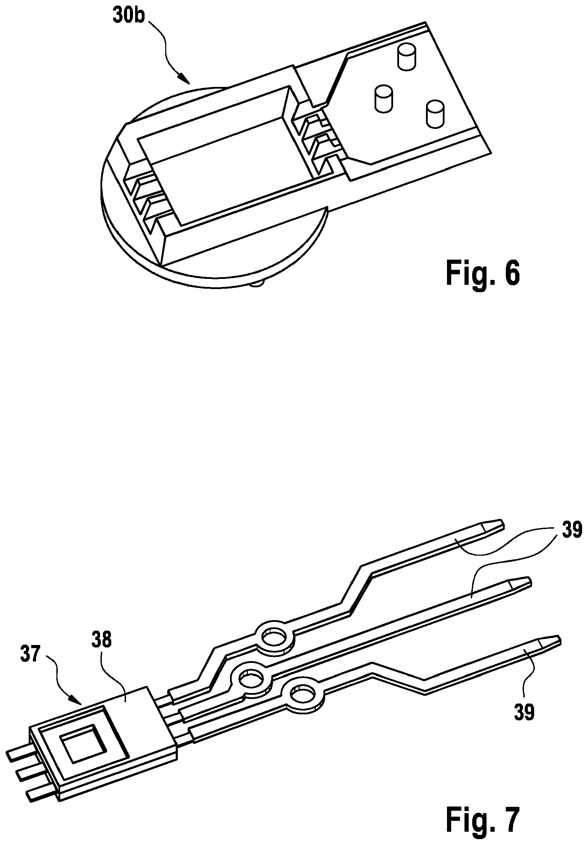

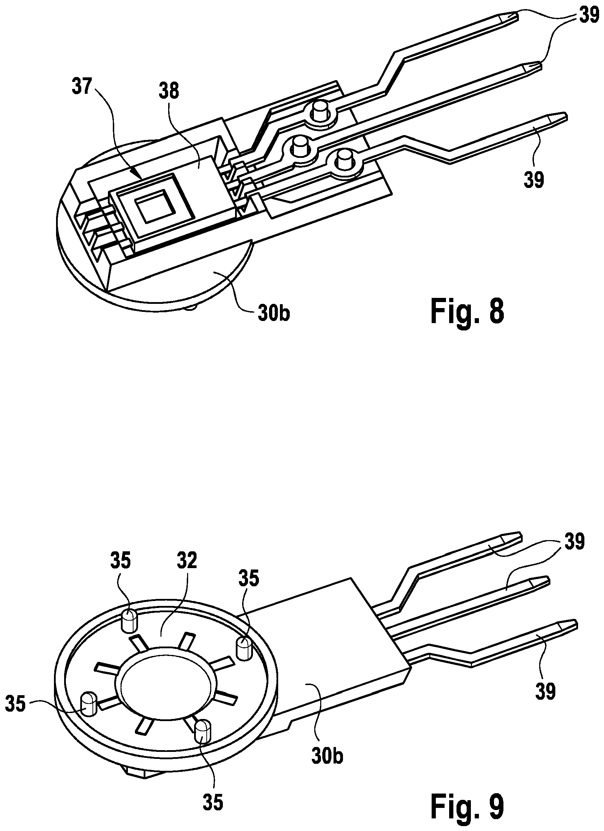

Wie in Fig. 6 gut zu erkennen, weist das zweite Vorrichtungselement 30b an seiner Unterseite eine Formgebung auf, die dazu geeignet ist, das in Fig. 7 dargestellte zweite Sensorelement 37 mit seinem Sensorgehäuse 38 und den Leiterbahnen 39 aufzunehmen. Dazu ist eine Vertiefung für das Sensorgehäuse 38 vorgesehen. Des Weiteren weist das zweite Vorrichtungselement 30b Stifte auf, die in entsprechende ringförmige Ausformungen der Leiterbahnen 39 passen. Eine feste Verbindung ist hierbei nicht unbedingt notwendig. Es reicht aus, wenn das zweite Sensorelement 37 mit seinem Sensorgehäuse 38 und den Leiterbahnen 39 an dem zweiten Vorrichtungselement 30b entsprechend der Darstellung in Fig. 8 locker befestigt ist, bevor beides von dem Gehäuse 40 umspritzt wird.

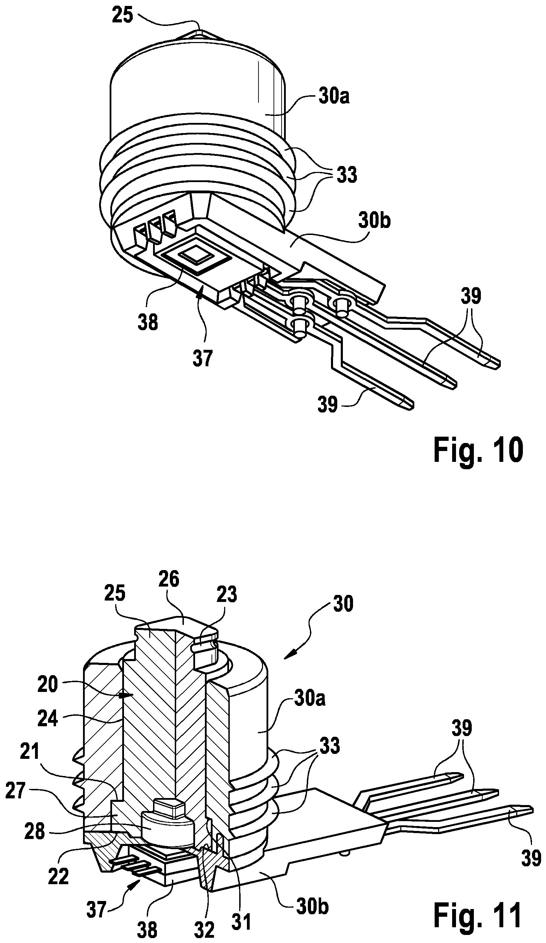

Die Oberseite des zweiten Vorrichtungselements 30b mit den bereits beschriebenen Stiften 35 ist in der Darstellung der Fig. 9 erkennbar. Die zum Wellenfuß 27 gerichtete Lagerfläche ist durch mehrere Ausnehmungen segmentiert. Der Rand des zweiten Vorrichtungselements 30b ist außerdem leicht überkragend ausgebildet, so dass die beiden Vorrichtungselemente 30a, 30b während der Herstellung leichter ineinander gesteckt werden können und dicht sind. Die Einheit von Positioniervorrichtung 30, Welle 20 und erstem Sensorelement 28 sowie von zweitem Sensorelement 37, Sensorgehäuse 38 und Leiterbahnen 39 ist in den Figuren 10 und 11 in unterschiedlichen Ansichten dargestellt.

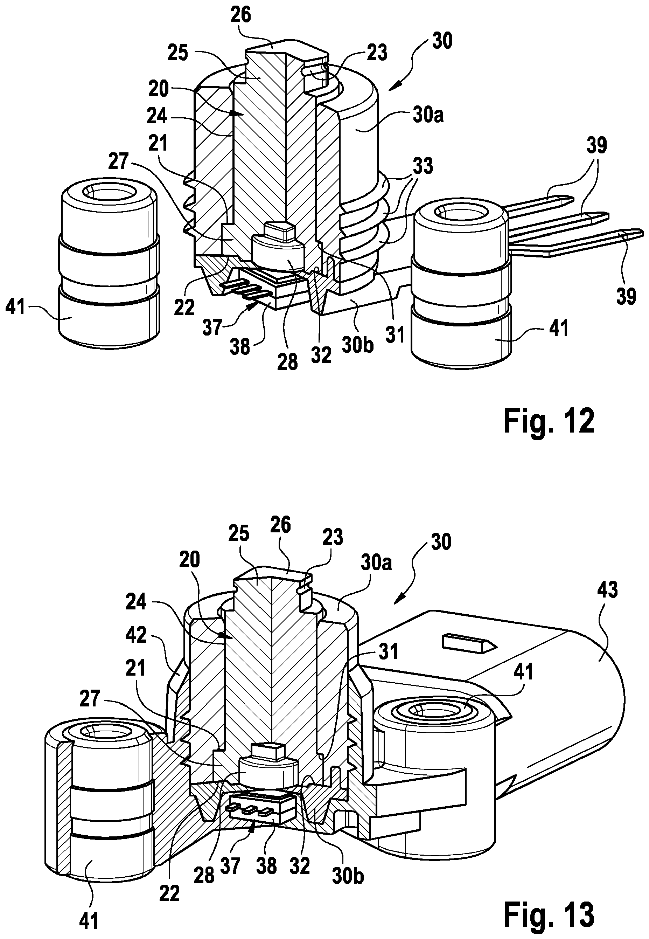

Eine Anordnung der verschiedenen Einlegeteile in der Gehäuseform vor dem Spritzvorgang für das Gehäuse 40 ist in Fig. 12 dargestellt.

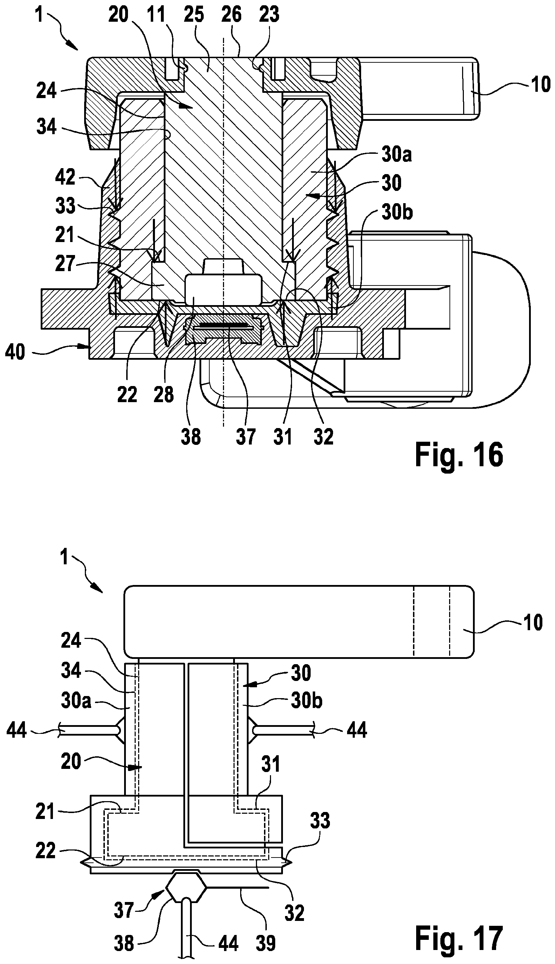

Nach dem Spritzvorgang umschließt das Gehäuse 40 die Einlegeteile und hält diese an ihrer Position fest, entsprechend der Darstellung in Fig. 13. Axiale Kräfte an der Welle 20 und an der Positioniervorrichtung 30 sind in Fig. 16 dargestellt.

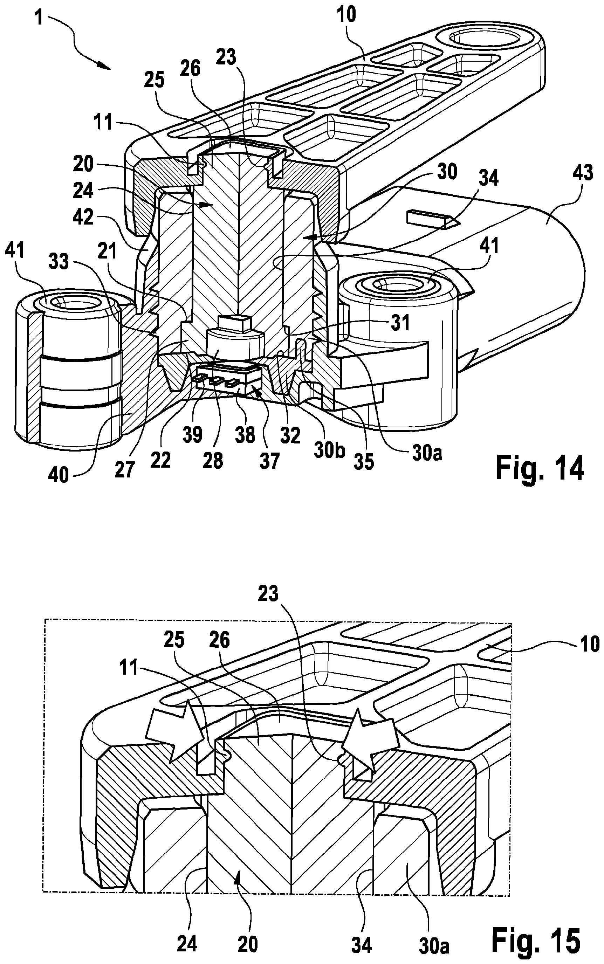

In einem weiteren in den Figuren 14 und 15 dargestellten Herstellungsschritt wird der Hebel 10 auf den Wellenkopf 25 aufgesetzt und durch eine auf die Verstemmfläche 26 des Wellenkopfs 25 einwirkende Kraft die Verstemmrippe 11 mit der Nut 23 der Welle 20 verstemmt. Anschließend ist der Hebel 10 an der Welle 20 befestigt.

Ein Winkelsensor 1 nach einem weiteren Ausführungsbeispiel der Erfindung ist in Fig. 17 dargestellt. Auf bereits beschriebene Komponenten soll an dieser Stelle nicht erneut eingegangen werden. Bei diesem Ausführungsbeispiel der Erfindung bestimmt das erste Vorrichtungselement 30a durch eine L-förmige Ausformung sowohl die axiale als auch die radiale Positionierung der Welle 20 mit dem hier nicht dargestellten ersten Sensorelement 28. Das zweite Vorrichtungselement 30b ist im Wesentlichen schalenförmig bzw. als Teil eines Zylinders ausgeformt, so dass ihm lediglich eine verschließende und abdichtende Wirkung zukommt. Die Darstellung der Fig. 17 zeigt einen Zustand vor dem Umspritzen des Gehäuses 40. Das erste und zweite Vorrichtungselement 30a, 30b sowie das zweite Sensorelement 37 mit Sensorgehäuse 38 und Leiterbahnen 39 werden in der Gehäuseform durch Sockel 44 in Position gehalten.

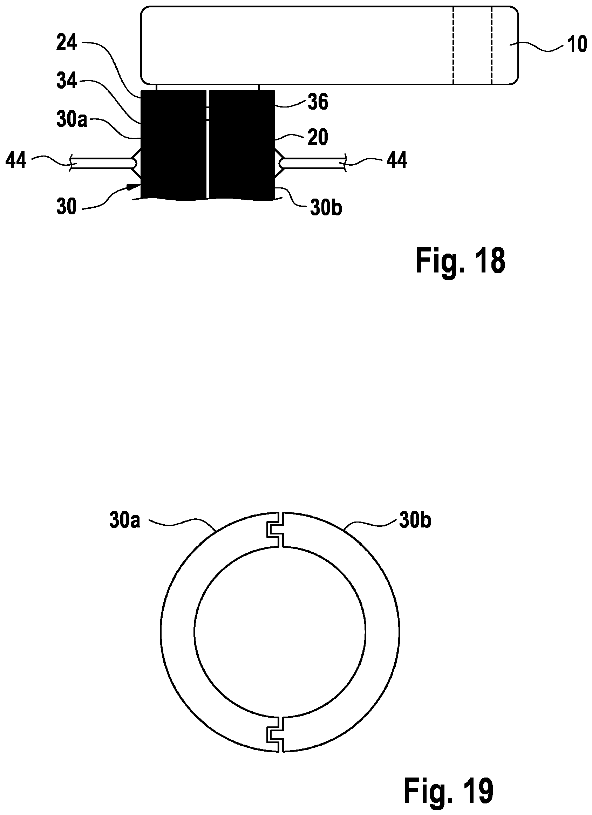

Um eine zusätzliche Dichtwirkung zu dem durch das aufgespritzte Gehäuse 40 erzeugten Druck zu erhalten, ist zwischen der Welle 20 und der Positioniervorrichtung 30 eine Dichtung 36 vorgesehen, wie aus der Darstellung der Fig. 18 ersichtlich ist.

Wie in Fig. 19 dargestellt, wird in radialer Richtung ein Verschieben des ersten Vorrichtungselements 30a gegenüber dem zweiten Vorrichtungselement 30b vor dem Umspritzen des Gehäuses 40 durch eine Nut im einen und ein entsprechendes formschlüssiges Gegenstück im anderen Vorrichtungselement 30a, 30b verhindert.

### Bezugszeichenliste

- 1: Winkelsensor

- 10: Hebel
- 11: Verstemmrippe

- 20: Welle
- 21: erste Stufe
- 22: zweite Stufe
- 23: Nut
- 24: wellenseitige Lagerfläche
- 25: Wellenkopf
- 26: Verstemmfläche
- 27: Wellenfuß
- 28: erstes Sensorelement
- 29: Wellenachse

- 30: Positioniervorrichtung
- 30a: erstes Vorrichtungselement
- 30b: zweites Vorrichtungselement
- 31: erste Auflagefläche
- 32: zweite Auflagefläche
- 33: umlaufende Rippe
- 34: Vorrichtungs-Lagerfläche
- 35: Stift
- 36: Dichtung
- 37: zweites Sensorelement
- 38: Sensorgehäuse
- 39: Leiterbahnen

- 40: Gehäuse
- 41: Befestigungsvorrichtungen
- 42: Zylinderbereich
- 43: Anschlussbereich
- 44: Sockel

## Patentansprüche

1. Winkelsensor (1) zum Erfassen eines Drehwinkels basierend auf einer relativen Winkellage eines physikalischen Feldes, umfassend
- ein erstes und ein zweites Sensorelement (28, 37), zwischen denen das physikalische Feld übertragbar ist, wobei das erste Sensorelement (28) als Geberelement und das zweite Sensorelement (37) als Nehmerelement ausgebildet ist oder umgekehrt,
- eine drehbar gelagerte Welle (20) an der das erste Sensorelement (28) fixiert ist,
- ein Gehäuse (40), das einen Zylinderbereich (42) zur Aufnahme der Welle (20) umfasst,
wobei das Gehäuse (40) zumindest teilweise um eine Positioniervorrichtung (30) umspritzt ausgebildet ist, **dadurch gekennzeichnet, dass** die Positioniervorrichtung (30) in ein erstes und ein zweites Vorrichtungselement (30a, 30b) geteilt ist und wobei die Positioniervorrichtung (30) die radiale und axiale Position der Welle (20) und des ersten Sensorelements (28) gegenüber dem zweiten Sensorelement (37) bestimmt.

2. Winkelsensor (1) nach Anspruch 1, **dadurch gekennzeichnet, dass** die Welle (20) eine erste Stufe (21) aufweist, an der das erste oder das zweite Vorrichtungselement (30a, 30b) oder beide mit einer ersten Auflagefläche (31) anliegen.

3. Winkelsensor (1) nach Anspruch 2, **dadurch gekennzeichnet, dass** die Welle (20) eine zweite Stufe (22) aufweist, an der das erste oder das zweite Vorrichtungselement (30a, 30b) oder beide mit einer zweiten Auflagefläche (32) in der entgegengesetzten Richtung der ersten Auflagefläche (31) anliegen.

4. Winkelsensor (1) nach einem der vorhergehenden Ansprüche, **dadurch gekennzeichnet, dass** das zweite Vorrichtungselement (30b) in einer Richtung der Wellenachse (29) sowohl an der Welle (20) als auch an dem ersten Vorrichtungselement (30a) anliegt.

5. Winkelsensor (1) nach einem der vorhergehenden Ansprüche, **dadurch gekennzeichnet, dass** die Positioniervorrichtung (30), insbesondere das erste Vorrichtungselement (30a), eine zylinderförmige oder konische Hülse um die Welle (20) bildet.

6. Winkelsensor (1) nach einem der vorhergehenden Ansprüche, **dadurch gekennzeichnet, dass** die Welle (20) drehbar gelagert von der Positioniervorrichtung (30) umschlossen wird.

7. Winkelsensor (1) nach einem der vorhergehenden Ansprüche, **dadurch gekennzeichnet, dass** das erste und zweite Vorrichtungselement (30a, 30b) in einer Richtung der Wellenachse (29) hintereinander angeordnet sind, wobei die Position der Welle (20) von dem ersten Vorrichtungselement (30a) in radialer Richtung und von dem zweiten Vorrichtungselement (30b) in axialer Richtung bestimmt wird.

8. Winkelsensor (1) nach einem der Ansprüche 1 bis 6, **dadurch gekennzeichnet, dass** das erste und zweite Vorrichtungselement (30a, 30b) in einer Richtung senkrecht zur Wellenachse (29) nebeneinander angeordnet sind, wobei die Position der Welle (20) von dem ersten Vorrichtungselement (30a) in radialer Richtung und in axialer Richtung bestimmt wird.

9. Winkelsensor (1) nach einem der vorhergehenden Ansprüche, **dadurch gekennzeichnet, dass** die Vorrichtungselemente (30a, 30b) formschlüssig ineinander greifen oder durch Verrastelemente, Haken, Klammern, Verstemmdome, Schrauben, Nieten oder eine Klebeverbindung aneinander befestigt sind.

10. Winkelsensor (1) nach einem der vorhergehenden Ansprüche, **dadurch gekennzeichnet, dass** das die Vorrichtungselemente (30a, 30b) formschlüssig gegen eine gegenseitige Verdrehung gesichert sind.

11. Winkelsensor (1) nach einem der vorhergehenden Ansprüche, **dadurch gekennzeichnet, dass** das zweite Sensorelement (37) mit Leiterbahnen (39) verbunden ist, wobei das zweite Sensorelement (37) und wenigstens ein Teil der Leiterbahnen (39) in die Positioniervorrichtung (30) integriert sind.

12. Winkelsensor (1) nach Anspruch 11, **dadurch gekennzeichnet, dass** die Positioniervorrichtung (30) um das zweite Sensorelement (37) und die Leiterbahnen (39) umspritzt ausgebildet ist oder an diesen durch Verrastelemente, Haken, Klammern, Verstemmdome, Schrauben, Nieten oder eine Klebeverbindung befestigt ist.

13. Winkelsensor (1) nach einem der vorhergehenden Ansprüche, **dadurch gekennzeichnet, dass** der Winkelsensor (1) Teil eines Höhenstandssensors in einem Kraftfahrzeug ist.

14. Verfahren zum Herstellen eines Winkelsensors (1) nach einem der vorhergehenden Ansprüche, **gekennzeichnet durch** die Schritte
- Einlegen der Welle (20) mit dem ersten Sensorelement (28) in das erste Vorrichtungselement (30a),
- Vervollständigen der Positioniervorrichtung (30) durch Anbringen des zweiten Vorrichtungselements (30b) an dem ersten Vorrichtungselement (30a),
- Einschieben der Einheit von Positioniervorrichtung (30), Welle (20) und erstem Sensorelement (28) in eine Gehäuseform,
- Umspritzen des Gehäuses (40) um die Einheit von Positioniervorrichtung (30), Welle (20) und erstem Sensorelement (28) .

15. Verfahren zum Herstellen eines Winkelsensors (1) nach Anspruch 14, **gekennzeichnet durch** die Schritte
- Aufsetzen eines Hebels (10) auf die Welle (20),
- Befestigen des Hebels auf der Welle (20) durch Verformen der Welle (20).

## Claims

1. Angle sensor (1) for detecting a rotation angle based on a relative angular position of a physical field, comprising
- a first and a second sensor element (28, 37) between which the physical field can be transmitted, wherein the first sensor element (28) is designed as a master element and the second sensor element (37) is designed as a slave element, or vice versa,
- a rotatably mounted shaft (20) to which the first sensor element (28) is fixed,
- a housing (40) which comprises a cylinder region (42) for receiving the shaft (20),
wherein the housing (40) is designed such that it is at least partially overmoulded around a positioning apparatus (30), **characterized in that** the positioning apparatus (30) is split into a first and a second apparatus element (30a, 30b), and wherein the positioning apparatus (30) determines the radial and axial position of the shaft (20) and of the first sensor element (28) in relation to the second sensor element (37).

2. Angle sensor (1) according to Claim 1, **characterized in that** the shaft (20) has a first step (21) against which the first or the second apparatus element (30a, 30b) or both bear by way of a first support surface (31).

3. Angle sensor (1) according to Claim 2, **characterized in that** the shaft (20) has a second step (22) against which the first or the second apparatus element (30a, 30b) or both bear by way of a second support surface (32) in the opposite direction to the first support surface (31) .

4. Angle sensor (1) according to one of the preceding claims, **characterized in that** the second apparatus element (30b) bears both against the shaft (20) and also against the second apparatus element (30a) in a direction of the shaft axis (29).

5. Angle sensor (1) according to one of the preceding claims, **characterized in that** the positioning apparatus (30), in particular the first apparatus element (30a), forms a cylindrical or conical sleeve around the shaft (20) .

6. Angle sensor (1) according to one of the preceding claims, **characterized in that** the shaft (20) is enclosed by the positioning apparatus (30) in a rotatably mounted manner.

7. Angle sensor (1) according to one of the preceding claims, **characterized in that** the first and the second apparatus element (30a, 30b) are arranged one behind the other in a direction of the shaft axis (29), wherein the position of the shaft (20) is determined by the first apparatus element (30a) in the radial direction and by the second apparatus element (30b) in the axial direction.

8. Angle sensor according to one of Claims 1 to 6, **characterized in that** the first and the second apparatus element (30a, 30b) are arranged next to one another in a direction perpendicular to the shaft axis (29), wherein the position of the shaft (20) is determined by the first apparatus element (30a) in the radial direction and in the axial direction.

9. Angle sensor (1) according to one of the preceding claims, **characterized in that** the apparatus elements (30a, 30b) interengage in an interlocking manner or are fastened to one another by latching elements, hooks, clips, caulking domes, screws, rivets or an adhesive bond.

10. Angle sensor (1) according to one of the preceding claims, **characterized in that** the apparatus elements (30a, 30b) are secured against mutual rotation in an interlocking manner.

11. Angle sensor (1) according to one of the preceding claims, **characterized in that** the second sensor element (37) is connected to conductor tracks (39), wherein the second sensor element (37) and at least some of the conductor tracks (39) are integrated into the positioning apparatus (30).

12. Angle sensor (1) according to Claim 11, **characterized in that** the positioning apparatus (30) is designed in a manner overmoulded around the second sensor element (37) and the conductor tracks (39) or is fastened to them by latching elements, hooks, clips, caulking domes, screws, rivets or an adhesive bond.

13. Angle sensor (1) according to one of the preceding claims, **characterized in that** the angle sensor (1) is part of a height sensor in a motor vehicle.

14. Method for producing an angle sensor (1) according to one of the preceding claims, **characterized by** the steps of
- inserting the shaft (20) with the first sensor element (28) into the first apparatus element (30a),
- completing the positioning apparatus (30) by attaching the second apparatus element (30b) to the first apparatus element (30a),
- pushing the unit comprising the positioning apparatus (30), the shaft (20) and the first sensor element (28) into a housing mould,
- overmoulding the housing (40) around the unit comprising the positioning apparatus (30), the shaft (20) and the first sensor element (28).

15. Method for producing an angle sensor (1) according to Claim 14, **characterized by** the steps of
- fitting a lever (10) onto the shaft (20),
- fastening the lever on the shaft (20) by deforming the shaft (20).

## Revendications

1. Capteur d'angle (1) destiné à détecter un angle de rotation sur la base d'une position angulaire relative d'un champ physique, comprenant
- des premier et second éléments capteurs (28, 37) entre lesquels le champ physique peut être transféré, dans lequel le premier élément capteur (28) est réalisé sous la forme d'un élément émetteur et le second élément capteur (37) est réalisé sous la forme d'un élément récepteur ou vice versa,
- un arbre (20) monté tournant sur lequel est fixé le premier élément capteur (28),
- un boîtier (40) qui comprend une zone cylindrique (42) pour recevoir l'arbre (20),
dans lequel le boîtier (40) est au moins partiellement moulé par injection autour d'un dispositif de positionnement (30), **caractérisé en ce que** le dispositif de positionnement (30) est divisé en des premier et second éléments (30a, 30b) et dans lequel le dispositif de positionnement (30) détermine la position radiale et axiale de l'arbre (20) et du premier élément capteur (28) par rapport au second élément capteur (37).

2. Capteur d'angle (1) selon la revendication 1, **caractérisé en ce que** l'arbre (20) comporte un premier étage (21) sur lequel le premier ou le second élément de dispositif (30a, 30b) ou les deux reposent par une première surface d'appui (31).

3. Capteur d'angle (1) selon la revendication 2, **caractérisé en ce que** l'arbre (20) comporte un deuxième étage (22) sur lequel le premier ou le second élément de dispositif (30a, 30b) ou les deux reposent par une seconde surface d'appui (32) dans la direction opposée à la première surface d'appui (31).

4. Capteur d'angle (1) selon l'une des revendications précédentes, **caractérisé en ce que** le second élément de dispositif (30b) repose sur l'arbre (20) ainsi que sur le premier élément de dispositif (30a) dans une direction de l'axe (29) de l'arbre.

5. Capteur d'angle (1) selon l'une des revendications précédentes, **caractérisé en ce que** le dispositif de positionnement (30), en particulier le premier élément de dispositif (30a), forme un manchon cylindrique ou conique autour de l'arbre (20).

6. Capteur d'angle (1) selon l'une des revendications précédentes, **caractérisé en ce que** l'arbre (20) est monté tournant en étant entouré par le dispositif de positionnement (30).

7. Capteur d'angle (1) selon l'une des revendications précédentes, **caractérisé en ce que** les premier et second éléments de dispositif (30a, 30b) sont disposés l'un derrière l'autre dans une direction de l'axe (29) de l'arbre, dans lequel la position de l'arbre (20) est déterminée par le premier élément de dispositif (30a) dans la direction radiale et par le second élément de dispositif (30b) dans la direction axiale.

8. Capteur d'angle (1) selon l'une des revendications 1 à 6, **caractérisé en ce que** les premier et second éléments de dispositif (30a, 30b) sont disposés côte à côte dans une direction perpendiculaire à l'axe (29) de l'arbre, dans lequel la position de l'arbre (20) est déterminée par le premier élément de dispositif (30a) dans la direction radiale et dans la direction axiale.

9. Capteur d'angle (1) selon l'une des revendications précédentes, **caractérisé en ce que** les éléments de dispositif (30a, 30b) s'engagent l'un dans l'autre par complémentarité de forme ou sont fixés l'un à l'autre par des éléments de verrouillage, des crochets, des colliers, des dômes de calfeutrage, des vis, des rivets ou un joint adhésif.

10. Capteur d'angle (1) selon l'une des revendications précédentes, **caractérisé en ce que** les éléments de dispositif (30a, 30b) sont protégés par complémentarité de forme contre une rotation l'un par rapport à l'autre.

11. Capteur d'angle (1) selon l'une des revendications précédentes, **caractérisé en ce que** le second élément capteur (37) est relié à des pistes conductrices (39), dans lequel le second élément capteur (37) et au moins une partie des pistes conductrices (39) sont intégrés dans le dispositif de positionnement (30).

12. Capteur d'angle (1) selon la revendication 11, **caractérisé en ce que** le dispositif de positionnement (30) est moulé par injection autour du second élément capteur (37) et des pistes conductrices (39) ou est fixé à celles-ci par des éléments de verrouillage, des crochets, des colliers, des dômes de calfeutrage, des vis, des rivets ou un joint adhésif.

13. Capteur d'angle (1) selon l'une des revendications précédentes, **caractérisé en ce que** le capteur d'angle (1) fait partie d'un capteur de niveau dans un véhicule automobile.

14. Procédé de fabrication d'un capteur d'angle (1) selon l'une des revendications précédentes, **caractérisé par** les étapes consistant à
- introduire l'arbre (20) comportant le premier élément capteur (28) dans le premier élément de dispositif (30a),
- compléter le dispositif de positionnement (30) en fixant le second élément de dispositif (30b) au premier élément de dispositif (30a),
- insérer l'ensemble constitué par le dispositif de positionnement (30), l'arbre (20) et le premier élément de capteur (28) dans un boîtier,
- mouleur par injection le boîtier (40) autour de l'ensemble constitué par le dispositif de positionnement (30), l'arbre (20) et le premier élément capteur (28).

15. Procédé de fabrication d'un capteur d'angle (1) selon la revendication 14, **caractérisé par** les étapes consistant à
- placer un levier (10) sur l'arbre (20),
- fixer le levier sur l'arbre (20) en déformant l'arbre (20) .
